# EUROPEAN PATENT APPLICATION

(11) **EP 2 330 810 A1**
(43) Date of publication of application: **08.06.2011**
(21) Application number: 10163773.4
(22) Date of filing: 25.05.2010
(51) Int. Cl.: H04M 3/428

(54) **Method and system for reminding a subscriber about a call on hold**

(30) Priority: 03.12.2009 IN CH29812009
(71) Applicant: Alcatel Lucent, 75007 Paris (FR)
(72) Inventor: Gupta, Vikas, 122001, Haryana (IN); Sahu, Amit Ranjan, 122001, Haryana. (IN)
(74) Representative: Sciaux, Edmond

(57) **Abstract**

A method and system is provided for managing a scenario wherein a first telecommunication session between a first telecommunication device and a second telecommunication device is interrupted to establish a telecommunication session between the first telecommunication device and a third telecommunication device. The method includes, receiving a request to establish the telecommunication session between the third and first telecommunication devices (104). Thereafter, the first telecommunication session is put on hold (106). Further, telecommunication session between the first and third telecommunication devices is established (108). Subsequently, a signal may be received from the second telecommunication device to send a reminder to the first telecommunication device (110) to indicate that the first telecommunication session is on hold, wherein the signal is generated in response to operating the second telecommunication device. Consequently, a reminder is sent to the first telecommunication device (116).

## Description

### FIELD OF INVENTION

This invention relates to telecommunication and more particularly but not exclusively, to managing a scenario where one user who is in a telephonic conversation with a second user has been put on hold.

### BACKGROUND OF INVENTION

In telecommunication it is generally observed that when two telecommunication subscribers, a first user and a second user, are indulged in a telephonic communication with each other, either of the users may get a call from a third user. If a second user gets a call from the third user, the second user may either chose to not respond to the call, thereby dropping the incoming call, or the second user may answer the call. If the second user answers the call, then the first user is put on hold. Alternatively, either of the first user and the second user who are indulged in a telephonic communication with each other can put the other user on hold and call a third user.

Currently when a user has been put on hold by another user, for example, if a first user has been put on hold by a second user, then the second user receives alerts at predefined intervals of time reminding that the first user has been kept on hold. The alerts are sent by the telecommunication network operator to the second user who has put the first user on hold. A data processing system which may be controlled by the network operator would be configured to send alerts to the user who has put the other user on hold.

In the currently used technique, the first user who has been put on hold may get frustrated waiting for the second user who has put him on hold to relieve him from being on hold and continue the telephonic discussion. Further, the first user will have to rely on the network operator to send alerts, which may be sent at intervals which may have been defined by the network operator. Furthermore, the first user may not even be aware that the network is sending alerts to the user that the user has been put on hold, thereby increasing his frustration. Hence, the first user is in a dilemma in judging whether the second user remembers that he has kept him on hold.

### STATEMENT OF INVENTION

Accordingly, an embodiment herein provides a method for managing a scenario wherein a first telecommunication session between a first telecommunication device and one or more remaining telecommunication devices is interrupted to establish a telecommunication session between the first telecommunication device and a third telecommunication device. The method includes receiving a request to establish the telecommunication session between the third telecommunication device and the first telecommunication device. Thereafter, the first telecommunication session between the first telecommunication device and the remaining telecommunication devices those are in the telecommunication session is rendered on hold. Further, the telecommunication session between the first telecommunication device and the third telecommunication device is established. Furthermore, a signal from one or more of the remaining telecommunication devices to send reminder to the first telecommunication device is received to indicate that the first telecommunication session is on hold, wherein the signal is generated in response to operating one of the remaining telecommunication devices. Consequently, the reminder is sent to the first telecommunication device.

There is also provided a system for managing a scenario wherein a first telecommunication session between a first telecommunication device and one or more remaining telecommunication devices is interrupted to establish a telecommunication session between the first telecommunication device and a third telecommunication device. The system includes at least one server. The server is configured to receive a request to establish the telecommunication session between the third telecommunication device and the first telecommunication device. The server is further configured to render the first telecommunication session between the first telecommunication device and the remaining telecommunication devices that are in the telecommunication session on hold, and establish the telecommunication session between the first telecommunication device and the third telecommunication device. Furthermore, the server is configured to, receive a signal from one or more of the remaining telecommunication devices to send a reminder to the first telecommunication device to indicate that the first telecommunication session is on hold, wherein the signal is generated in response to operating one of the remaining telecommunication devices, and consequently send the reminder to the first telecommunication device.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF FIGURES

This invention is illustrated in the accompanying drawings, through out which like reference letters indicate corresponding parts in the various figures. The embodiments herein will be better understood from the following description with reference to the drawings, in which:

FIG. 1 is a flow chart illustrating a method for managing a scenario wherein a first telecommunication session is rendered on hold, in accordance with an embodiment;

FIG. 2 is a flow diagram illustrating a method for managing a scenario wherein a user A has rendered a telecommunication session with user B on hold, in accordance with an embodiment;

FIG. 3 is an illustration of a telecommunication device associated with user B, in which a key for initiating a reminder is indicated, in accordance with an embodiment; and

FIG. 4 is an illustration of a telecommunication device associated with user A, in which a message is displayed when the user A receives a reminder, in accordance with an embodiment.

### DETAILED DESCRIPTION OF INVENTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

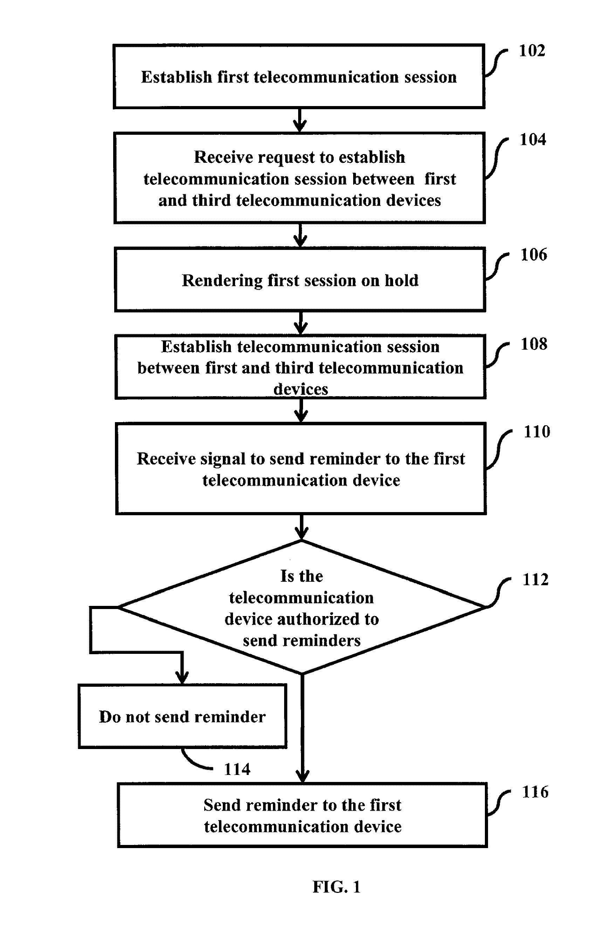

Embodiments provide a method and system for managing a scenario wherein a first telecommunication session between a first telecommunication device and one or more remaining telecommunication devices is interrupted to establish a telecommunication session between the first telecommunication device and a third telecommunication device. Referring now to the drawings, and more particularly to FIGS. 1 through 4, where similar reference characters denote corresponding features consistently throughout the figures, there are shown preferred embodiments.

A server that may also be referred to as an application server that is present in a telecommunication network enables management of a scenario wherein a first telecommunication session between a first telecommunication device and one or more remaining telecommunication devices is interrupted to establish a telecommunication session between the first telecommunication device and a third telecommunication device. The server may be configured to establish telecommunication sessions between telecommunication devices. Additionally, the server may be configured to render telecommunication sessions on hold. Further, the server may be configured to send reminders corresponding to the held telecommunication sessions.

FIG. 1 is a flow chart illustrating a method for managing a scenario wherein a first telecommunication session is rendered on hold, in accordance with an embodiment. At step 102, the first telecommunication session is established between telecommunication devices. The first telecommunication session may include a first telecommunication device and one or more remaining telecommunication devices. The first telecommunication session may be established when a user of the first telecommunication devices makes a request to a server to establish a telecommunication session with the remaining telecommunication devices. However, it may be noted that the first telecommunication session may be established in ways different from the one mentioned above. The first telecommunication session enables the users of the telecommunication devices that are part of the first telecommunication session to communicate with each other. In an embodiment, when the first telecommunication session is in progress, a request may be received by the server to establish telecommunication session between any one of the telecommunication devices that are part of the first telecommunication session and a third telecommunication device that is not part of the first telecommunication session. In an embodiment, at step 104, a request is received by the server to establish telecommunication session between the first telecommunication device and third telecommunication device. The request to establish telecommunication session between the first and third telecommunication devices may be made by either of the first and third telecommunication devices. The server after receiving the request, alerts the telecommunication device with which establishment of telecommunication session is requested for that a telecommunication session with it is requested. Subsequently, if the telecommunication device with which establishment of telecommunication session is requested for, agrees to the establishment of the telecommunication session, then the server establishes the telecommunication session between the first and third telecommunication devices at step 108. In an embodiment, before establishing the telecommunication session between the first and third telecommunication devices, the first telecommunication device requests the server to render the first telecommunication session on hold. Consequently, at step 106, the server renders the first session on hold, thereby, the remaining telecommunication devices in the first session are put on hold.

The remaining telecommunication devices that are rendered on hold may send a request to the server to send a reminder to the first telecommunication device, thereby alerting the first telecommunication device that the first session has been rendered on hold. The request is sent by the telecommunication device by operating the telecommunication device. In an embodiment, a key such as "#" that is present in the telecommunication device may be pressed to send the request to the server. In an embodiment, pressing of the key sends DTMF signal to the server. Consequently, at step 116, the server sends a reminder to the first telecommunication device, thereby alerting the first telecommunication device that the first session is rendered on hold. The reminder might also indicate the identity of the telecommunication device from which the reminder originated. In an embodiment, before sending the reminder to the first telecommunication device, the server, at step 112, verifies whether or not the telecommunication device that sent the request to the server is authorized to alert the first telecommunication device about the held session. If the telecommunication device is authorized, then the server sends the reminder at step 116, else the reminder is not sent. In another embodiment, the server verifies whether the first telecommunication device is authorized to receive reminders about the held session. If the first telecommunication device is authorized, then the server sends the reminder at step 116, else the reminder is not sent. The user of the first telecommunication device may resume the first telecommunication session or ignore the reminder.

The various actions in the foregoing method may be performed in the order presented, in a different order or simultaneously. Further, in some embodiments, some actions listed in FIG. 1 may be omitted.

The above method allows a user of a telecommunication device whose call has been kept on hold by a user of another telecommunication device to remind him about the held call.

### EXAMPLE

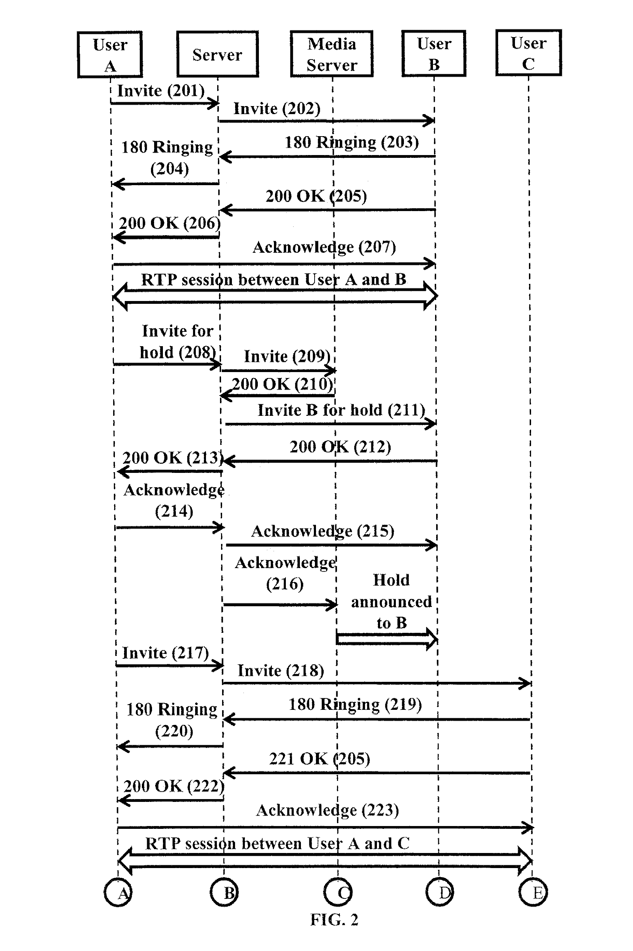

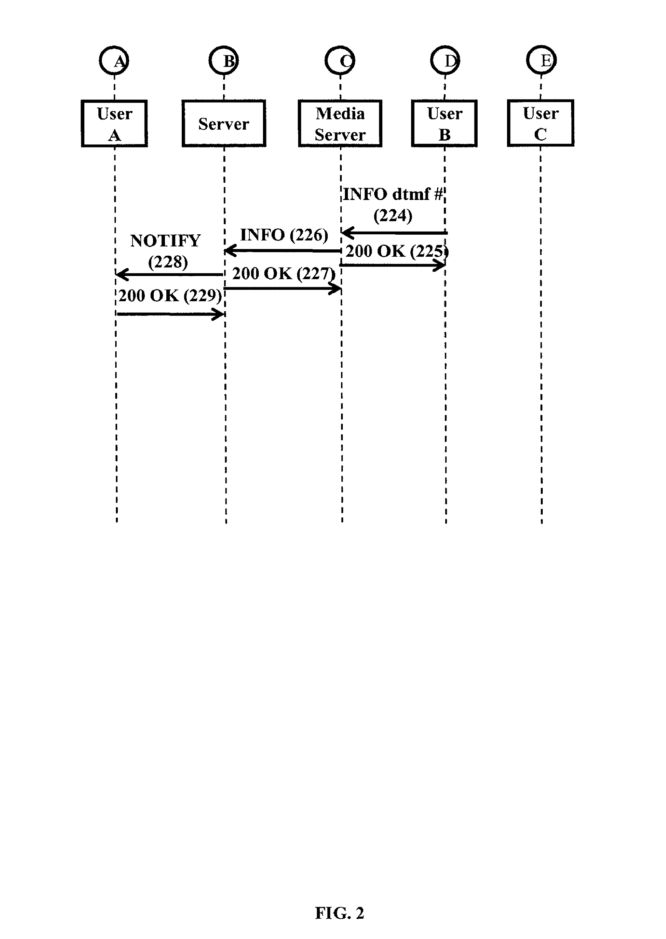

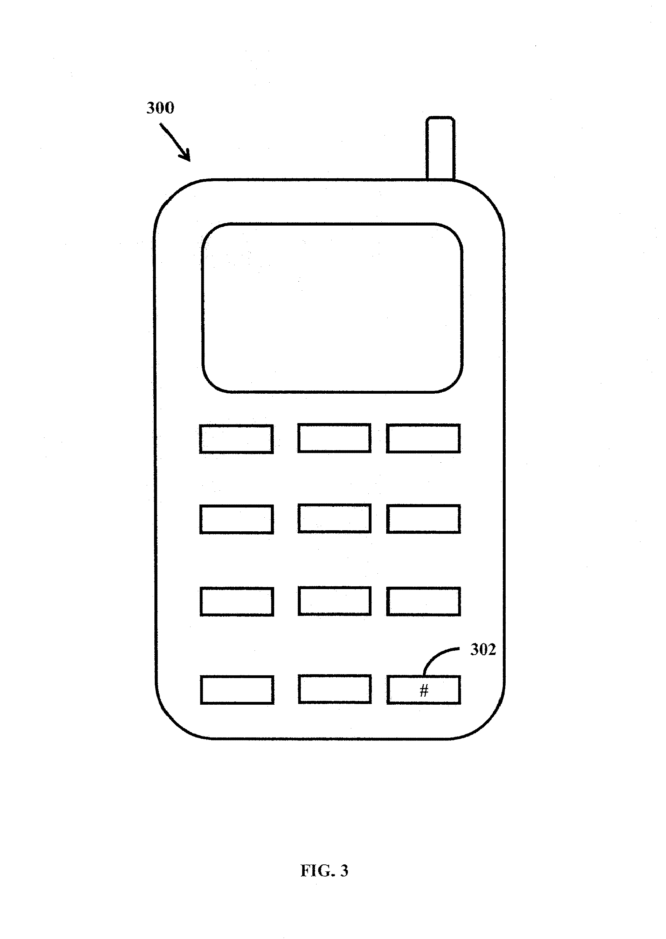

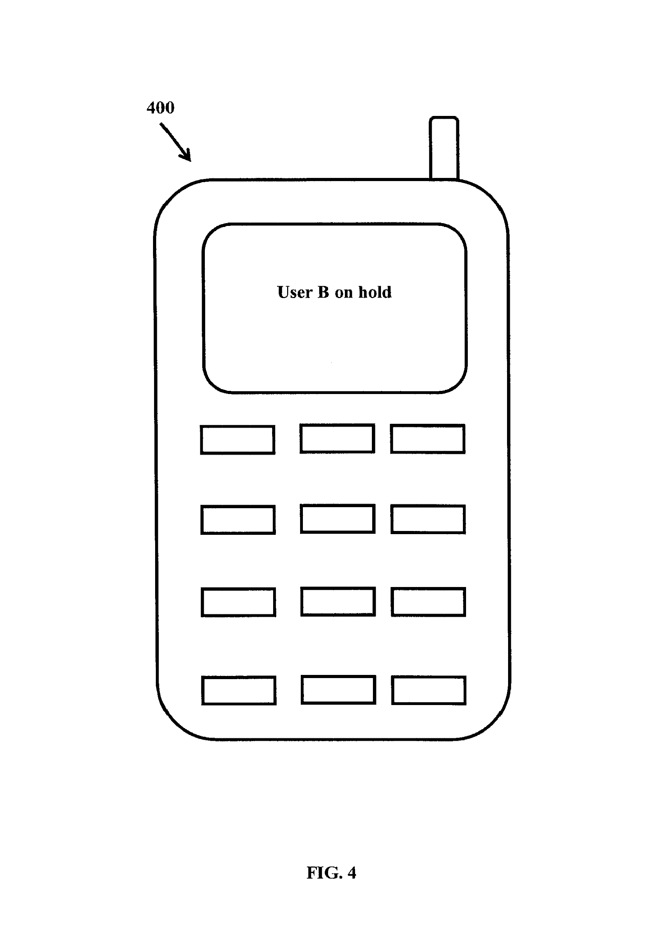

FIG. 2 is a flow diagram illustrating a method for managing a scenario wherein a user A has rendered a telecommunication session with user B on hold, in accordance with an embodiment. In this example User B has subscribed to a service that enables him to remind the other user who has put his call session on hold. As illustrated in FIG. 2, in accordance with an embodiment, User A calls user B, and RTP session is established between User A and B through steps 201 to 207. Thereafter, User A sends an INVITE (208) to the server to put User B on hold .The sever connects to the Media Server to put User B on hold by playing the announcement about the call being put on hold, through steps 208 to 216. Further, User A starts a new session with User C by sending an INVITE (217). RTP session is established between User A and C through steps 217 to 223. Thereafter, User B may remind or inform User A about the held call. To remind User A about the held call, User B sends DTMF signal to the media server. User B may send the DTMF signal by pressing a key in his device that is meant for sending reminders about held calls. For example, as illustrated in FIG. 3, the key "#" may be assigned as the key that needs to be pressed for sending reminders. After receiving the DTMF signal, the media server application will inform the server about the request from User B for the reminding about the held call between User A and User B. Thereafter, the server will initiate a notification to the User A about the held call with User B. The User A receives the notification (NOTIFY message (228)) that is initiated as a response to the request made by User B. User A is notified by playing a message (audio message) to remind him about the held call. Additionally or alternatively, a message may be displayed on User A's device, as exemplarily illustrated in FIG. 4, reminding him about the held call. After receiving the notification, User A can retrieve the held call or ignore the notification or reminder sent by user B.

In the above example, User A calls User B, and within the voice session, User A puts User B on hold, and User A calls User C. It will clear to a person skilled in the art that other scenario of rendering a call on hold and retrieving held calls may occur.

The embodiments disclosed herein can be implemented through at least one software program running on at least one hardware device and performing network management functions to control the network elements.

The embodiment disclosed herein describes a method and system for managing a scenario wherein a first telecommunication session between a first telecommunication device and one or more remaining telecommunication devices is interrupted to establish a telecommunication session between the first telecommunication device and a third telecommunication device. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in e.g. Very high speed integrated circuit Hardware Description Language (VHDL) another programming language, or implemented by one or more VHDL or several software modules being executed on at least one hardware device. The hardware device can be any kind of portable device that can be programmed. The device may also include means which could be e.g. hardware means like e.g. an ASIC, or a combination of hardware and software means, e.g. an ASIC and an FPGA, or at least one microprocessor and at least one memory with software modules located therein. The method embodiments described herein could be implemented partly in hardware and partly in software. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

## Claims

1. A method for managing a scenario wherein a first telecommunication session between a first telecommunication device and one or more remaining telecommunication devices is interrupted to establish a telecommunication session between the first telecommunication device and a third telecommunication device, the method comprising:
receiving a request to establish the telecommunication session between the third telecommunication device and the first telecommunication device;
rendering the first telecommunication session between the first telecommunication device and the remaining telecommunication devices on hold;
establishing the telecommunication session between the first telecommunication device and the third telecommunication device;
receiving a signal from one or more of the remaining telecommunication devices to send reminder to the first telecommunication device to indicate that the first telecommunication session is on hold, wherein the signal is generated in response to operating one of the remaining telecommunication devices; and
sending the reminder to the first telecommunication device.

2. The method according to claim 1, wherein receiving a signal from one or more of the remaining telecommunication devices comprises enabling operating the remaining telecommunication devices to send DTMF signals.

3. The method according to claim 2, wherein the DTMF signals are sent in response to pressing of a key in the telecommunication device.

4. The method according to claim 1, wherein the reminder is sent to the first telecommunication device if the telecommunication device among the remaining telecommunication devices, that is sending the signal is authorized to send reminders when a telecommunication session involving the telecommunication device is rendered on hold.

5. The method according to claim 1, wherein the reminder is sent to the first telecommunication device if the first telecommunication device is authorized to receive reminders when a telecommunication session involving the first telecommunication device is rendered on hold.

6. The method according to claim 1, wherein the request to establish the telecommunication session between the third telecommunication device and the first telecommunication device is received from the first telecommunication device.

7. The method according to claim 1, wherein the request to establish the telecommunication session between the third telecommunication device and the first telecommunication device is received from the third telecommunication device.

8. A system for managing a scenario wherein a first telecommunication session between a first telecommunication device and one or more remaining telecommunication devices is interrupted to establish a telecommunication session between the first telecommunication device and a third telecommunication device, the system comprising at least one server configured to:
receive a request to establish the telecommunication session between the third telecommunication device and the first telecommunication device;
render the first telecommunication session between the first telecommunication device and the remaining telecommunication devices that are in the telecommunication session on hold;
establish the telecommunication session between the first telecommunication device and the third telecommunication device;
receive a signal from one or more of the remaining telecommunication devices to send a reminder to the first telecommunication device to indicate that the first telecommunication session is on hold, wherein the signal is generated in response to operating one of the remaining telecommunication devices; and
send the reminder to the first telecommunication device.

9. The system according to claim 8, wherein the remaining telecommunication devices are configured to send DTMF signals to the server.

10. The system according to claim 9, wherein the remaining telecommunication devices are configured to send DTMF signals to the server in response to pressing of a key in the telecommunication device.

11. The system according to claim 8, wherein the server is configured to send reminder to the first telecommunication device if the telecommunication device sending the signal is authorized to send reminders when a telecommunication session involving the telecommunication device is rendered on hold.

12. The system according to claim 8, wherein the server is configured to send reminder to the first telecommunication device if the first telecommunication device is authorized to receive reminders when a telecommunication session involving the first telecommunication device is rendered on hold.

13. The system according to claim 8, wherein the server is configured to receive request from the first telecommunication device to establish the telecommunication session between the third telecommunication device and the first telecommunication device.

14. The system according to claim 8, wherein the server is configured to receive request from the third telecommunication device to establish the telecommunication session between the third telecommunication device and the first telecommunication device.

15. A method substantially as herein above described in the specification with reference to the accompanying drawings.

16. A system substantially as herein above described in the specification with reference to the accompanying drawings.
